# EUROPÄISCHE PATENTSCHRIFT

(11) **EP 3 592 588 B1**
(45) Veröffentlichungstag und Bekanntmachung des Hinweises auf die Patenterteilung: **11.05.2022**
(21) Anmeldenummer: 18712098.5
(22) Anmeldetag: 07.03.2018
(51) Int. Cl.: B60K 6/387, B60K 6/442, B60K 6/547, B60W 50/06, B60W 10/06, B60W 10/08, B60W 30/18, B60W 20/40

(54) **VERFAHREN ZUR STEUERUNG EINES KRAFTFAHRZEUGES UND KRAFTFAHRZEUG**
METHOD FOR CONTROLLING A MOTOR VEHICLE AND MOTOR VEHICLE
PROCÉDÉ DE COMMANDE D'UN VÉHICULE À MOTEUR ET VÉHICULE À MOTEUR

(30) Priorität: 10.03.2017 DE 102017204042
(43) Veröffentlichungstag der Anmeldung: 15.01.2020
(73) Patentinhaber: Volkswagen Aktiengesellschaft, 38440 Wolfsburg (DE)
(72) Erfinder: ZILLMER, Michael, 38173 Sickte (DE); PROCHAZKA, David, 38446 Wolfsburg (DE)
(86) Internationale Anmeldenummer: PCT/EP2018/055574
(87) Internationale Veröffentlichungsnummer: WO 2018/162535

(56) Entgegenhaltungen:
- DE-A1- 4 422 636
- DE-A1- 4 422 636
- DE-A1-102005 032 670
- DE-A1-102005 032 670
- DE-A1-102012 219 848
- DE-A1-102012 219 848

## Beschreibung

Die vorliegende Erfindung betrifft ein Verfahren zur Steuerung eines Kraftfahrzeuges mit einer Verbrennungskraftmaschine und (mindestens) einer elektrischen Maschine.

Allgemein sind Hybrid-Kraftfahrzeuge mit einer Verbrennungskraftmaschine und (mindestens) einer elektrischen Maschine bekannt, bei denen die Verbrennungskraftmaschine und die elektrische Maschine einzeln oder gemeinsam ein Antriebsmoment zum Antreiben der Antriebsräder des Kraftfahrzeugs bereitstellen. Die Entscheidung, ob das Antriebsmoment von der Verbrennungskraftmaschine, der elektrischen Maschine oder von beiden gemeinsam bereitgestellt wird (wobei die elektrische Maschine motorisch oder generatorisch betrieben werden kann), kann auf Grundlage einer Drehmomentanforderung erfolgen. Die Drehmomentanforderung kann bspw. von einem Kriechregler und/oder vom einem Fahrpedal stammen.

Ein Hybridfahrzeug kann einen Antrieb mit einer parallel arbeitenden Verbrennungskraftmaschine und elektrischen Maschine haben, wobei man diesen dann auch Parallelhybrid nennt im Gegensatz zum seriellen Hybrid, bei dem die elektrische Maschine und die Verbrennungskraftmaschine seriell arbeiten. Eine Mischform aus seriellen und parallelen Hybridfahrzeug stellt der sogenannte leistungsverzweigte Hybrid dar, bei dem die Leistung der Verbrennungskraftmaschine teilweise mechanisch auf die Antriebsräder übertragen und teilweise bspw. an eine Kombination von zwei elektrischen Maschine abgegeben wird, wobei eine generatorisch und die andere motorisch betrieben wird.

Außerdem gibt es auch das Konzept des Mild-Hybrids, bei dem die elektrische Maschine Antriebsmoment für das Anfahren typischerweise zusammen mit einer Verbrennungskraftmaschine bereitstellt und die elektrische Maschine bekanntermaßen entsprechen leistungsschwach ausgebildet ist.

Zur Komfortsteigerung ist es bei Automatikgetrieben bekannt, für das Anfahren einen Kriechregler einzusetzen. Es ist bekannt, dass der Kriechregler eine Soll-Geschwindigkeit und einen Soll-Drehzahlverlauf beziehungsweise den Gradienten dieser beiden Größen berechnet, wobei dies bei einem Hybrid-Kraftfahrzeug auch auf Grundlage aktuell verfügbarer Maximalwerte der Traktions-Elektromaschine erfolgen kann. Damit kann ein komfortabler Beschleunigungsverlauf für das Fahrzeug erzielt werden. Der Kriechregler baut zum Beispiel bereits mit dem Entlasten eines Bremspedals ein geringes Antriebsmoment auf, wodurch das Hybrid-Kraftfahrzeug aus einer niedrigen Geschwindigkeit heraus beschleunigt bzw. nur mit dem von der elektrischen Maschine bereitgestellten Antriebsmoment anfährt. Mit diesem Vorgehen kann das Kraftfahrzeug allgemein auch bspw. an einer Steigungen gehalten werden und somit ein Zurückrollen vermieden werden. Der Kriechregler arbeitet typischerweise ohne zusätzliche Lastanforderung, also ohne Betätigung des Fahrpedals.

Aus der deutschen Offenlegungsschrift DE 10 2015 112 262 A1 ist ein Verfahren zum Starten einer Kraftmaschine eines Hybrid-Elektrofahrzeugs während eines Elektrofahrzeug-Antriebsmodus' bekannt. Um eine Verringerung eines Getriebeausgabedrehmoments während eines Autostartvorgangs der Kraftmaschine bei hoher Geschwindigkeit des Hybrid-Elektrofahrzeugs zu verhindern, schlägt die Offenlegungsschrift vor, das Autostartereignis der Kraftmaschine zu detektieren. Es wird ein von einem Fahrer angefordertes Ausgabedrehmoment und ein maximales Ausgabedrehmoment des Getriebes bestimmt. Überschreitet das von dem Fahrer angeforderte Ausgabedrehmoment das berechnete maximale Ausgabedrehmoment um weniger als einen kalibrierten Schwellwert, wird entweder die Kraftmaschine gestartet oder eine Motorübermodulationsroutine ausgeführt, ansonsten werden beide Maßnahmen durchgeführt. Probleme, die sich bspw. beim elektrischen Anfahren an einer Steigung mit Kriechregler ergeben, behandelt dieses Dokument nicht.

Aus der deutschen Offenlegungsschrift DE 10 2011 005 803 A1 ist ein Verfahren zum Betreiben eines Hybridfahrzeuges bekannt, das einen Verbrennungsmotor und einen elektrischen Antrieb hat. Das Verfahren sieht vor, dass selbst dann ein rein elektrischer Betriebsmodus beibehalten wird, wenn ein Wunschmoment ein maximales von der elektrischen Maschine bereitgestelltes Antriebsmoment übersteigt und bspw. die Differenz zwischen Wunschmoment und dem maximalen Antriebsmoment kleiner ist als ein vorgegebener Wert. Dadurch soll einem Fahrer signalisiert werden, dass die maximale Leistungsgrenze des Elektrobetriebs erreicht ist. Nachteilig daran ist, dass dies zu einer Irritation des Fahrers führen kann, wenn das Betätigen des Fahrpedals keinen spürbaren Beschleunigungseffekt hat.

Die deutsche Offenlegungsschrift DE 10 2015 100 014 A1 zeigt ein Verfahren zum Betreiben eines Hybrid-Kraftfahrzeuges, welches das Ermitteln eines Kriechdrehmoments und das Einstellen eines Anfangs-Kriechdrehmoments in Ansprechen auf eine Bedienerbremsanforderung und eine Richtungsänderung der Fahrzeuggeschwindigkeit relativ zu der vom Bediener gewählten Bewegungsrichtung vorsieht. Ein Zuschalten der Verbrennungskraftmaschine geschieht auf herkömmliche Weise.

Die deutsche Offenlegungsschrift DE 44 22 636 A1 zeigt ein Verfahren zur automatischen Steuerung der Bereitstellung von Leistung durch eine Brennkraftmaschine in Kraftfahrzeugen mit einem eine Brennkraftmaschine, einem Elektromotor und einem elektrischen Energiespeicher enthaltenden Hybridantrieb in Abhängigkeit vom Fahrzustand.

Die deutsche Offenlegungsschrift DE 10 2012 219 848 A1 zeigt ein Verfahren zur Steuerung oder Regelung eines Fahrerassistenzsystems in einem Kraftfahrzeug, das zumindest einen Elektromotor und eine weitere Antriebsmaschine enthält.

Aufgabe der vorliegenden Erfindung ist es, ein Verfahren zur Steuerung eines Kraftfahrzeugs und ein Kraftfahrzeug bereitzustellen, das die oben genannten Nachteile wenigstens teilweise überwindet.

Diese Aufgabe wird durch das erfindungsgemäße Verfahren nach Anspruch 1 und das Kraftfahrzeug nach Anspruch 8 gelöst.

Nach einem ersten Aspekt stellt die Erfindung ein Verfahren nach Anspruch 1.

Nach einem zweiten Aspekt stellt die Erfindung ein Kraftfahrzeug mit einer Verbrennungskraftmaschine und einer elektrischen Maschine bereit, wobei das Kraftfahrzeug in einem elektrischen Fahrzustand und in einem Hybrid-Fahrzustand betreibbar ist, wobei im elektrischen Fahrzustand die elektrische Maschine ein Antriebsmoment bereitstellt und im Hybrid-Fahrzustand die Verbrennungskraftmaschine Antriebsmoment bereitstellt, wobei das Kraftfahrzeug im Hybrid-Fahrzustand betrieben wird, wenn eine Drehmomentanforderung eine vorgegebene Drehmomentschwelle übersteigt, und mit einer Steuerung, die dazu eingerichtet ist, das Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung. Das Kraftfahrzeug kann als Hybrid-Kraftfahrzeug, auch Hybridelektrofahrzeug genannt, oder auch als sogenanntes Mild-Hybrid-Kraftfahrzeug ausgestaltet sein. Beim Mild-Hybrid-Kraftfahrzeug ist die Leistung der elektrischen Maschine typischerweise geringer als bei einem (Voll-)Hybrid-Kraftfahrzeug und liegt bspw. in einem Bereich von 6-14 kW pro Tonne Fahrzeuggewicht.

Grundsätzlich kann das Kraftfahrzeug dabei auch verschiedene Hybridtopologien aufweisen, wie einen Parallelhybrid, einen leistungsverzweigten Hybrid, einen seriell-parallelen Hybrid oder auch einen seriellen Hybrid.

Das Kraftfahrzeug hat eine Verbrennungskraftmaschine und eine (oder auch mehrere) elektrische Maschine(n), wobei die Verbrennungskraftmaschine beispielsweise eine Ein- oder Mehrzylinder-Brennkraftmaschine, z. B. mit Kraftstoffdirekteinspritzung sein kann, die Kraftstoff durch einen Verbrennungsprozess in mechanische Energie umwandelt, ohne dass die vorliegende Erfindung auf eine bestimmte Verbrennungskraftmaschine beschränkt ist. Die Verbrennungskraftmaschine kann bspw. ein Ottomotor, ein Dieselmotor, ein Wankelmotor oder dergleichen sein und einen oder mehrere Zylinder aufweisen.

Die (mindestens eine) elektrische Maschine des Kraftfahrzeuges kann ein Mehrphasen-Elektromotor sein, wie es bei Hybrid-Elektrofahrzeugen üblich ist, der elektrische Energie in mechanische Energie umwandelt und ggf. auch umgekehrt. Die elektrische Energie für den Betrieb der elektrischen Maschine und die elektrischen Energie, die bei der Rekuperation gewonnen wird, kann von einem Batteriemanagementsystem des Kraftfahrzeuges verwaltet werden.

Das Kraftahrzeug kann ein Getriebe haben, z. B. ein Doppelkupplungsgetriebe, welches das Antriebsdrehmoment der Verbrennungskraftmaschine bzw. der einen oder der mehreren elektrischen Maschinen an eine Antriebswelle zum Antreiben von Antriebsrädern überträgt. Das Getriebe kann ein (vorzugsweise automatisiertes) Handschaltgetriebe oder ein Automatikgetriebe sein.

Bei manchen Ausführungsbeispielen stellt die elektrische Maschine (bzw. die elektrischen Maschinen) das Antriebsmoment des Kraftfahrzeuges beim Anfahren oder auch Beschleunigen, z. B. aus niedrigen Geschwindigkeiten, bereit, wohingegen bei höheren Geschwindigkeiten oder hohen Beschleunigungen die Verbrennungskraftmaschine dazu geschaltet wird, um das Antriebsmoment darzustellen bzw. dieses zu erhöhen.

Die Fahrzustände werden bei manchen Ausführungsbeispielen durch einen sogenannten Hybrid-Koordinator bestimmt, wie es auch grundsätzlich bekannt ist.

Das Kraftfahrzeug kann wenigstens zwei Fahrzustände aufweisen, nämlich einen elektrischen Fahrzustand, bei dem nur die elektrische(n) Maschine(n) das Antriebsmoment bereitstellen, und einen Hybrid-Fahrzustand, bei dem die Verbrennungskraftmaschine ebenfalls Antriebsmoment bereitstellt, z. B. zusätzlich zu dem von der/n elektrische Maschine(n) bereitgestellten Antriebsmoment. Die Verbrennungskraftmaschine kann aber auch alleine das Antriebsmoment bereitstellen. Im Hybrid-Fahrzustand kann die (mindestens) eine elektrische Maschine generatorisch oder motorisch betrieben werden. Es kann auch ein dritter Fahrzustand vorhanden sein, bei dem generell nur die Verbrennungskraftmaschine das Antriebsmoment bereitstellt.

Im elektrischen Fahrzustand kann die Verbrennungskraftmaschine auch abgeschaltet sein oder vom Antriebsstrang entkoppelt sein, sodass sie kein Antriebsmoment bereitstellt bzw. auf den dahinterliegenden Antriebsstrang überträgt.

Die elektrische Maschine stellt ein Drehmoment M_{EM} bereit, das bauartbedingt, eine obere Grenze hat, die auch als maximales Drehmoment M_{EMmax} bezeichnet wird.

Gemäß dem erfindungsgemäßen Verfahren ist eine Drehmomentschwelle vorgesehen, anhand derer entschieden werden kann, ob das Kraftfahrzeug im elektrischen oder im Hybrid-Fahrzustand betrieben wird.

Die Drehmomentschwelle kann dabei grundsätzlich beliebig gewählt werden, entspricht aber bei manchen Ausführungsbeispielen dem maximalen Drehmoment M_{EMmax} der elektrischen Maschine oder einem gemeinsamen maximalen Drehmoment, das von (den) mehreren elektrischen Maschinen bereitgestellt wird. Die Drehmomentschwelle kann auch strategisch gewählt werden, um bspw. die Verbrennungskraftmaschine rechtzeitig insbesondere für die Darstellung einer effizienzoptimierten Betriebsart zu starten.

Die Drehmomentschwelle kann aber auch indikativ für eine Lastschwelle oder eine Leistungsschwelle sein, da das Drehmoment, die Last und die Leistung (bei Kenntnis der Antriebsdrehzahl(en)) Größen sind, die ineinander umrechenbar sind. Daher umfasst die Drehmomentschwelle bei manchen Ausführungsbeispielen auch eine Lastschwelle und/oder Leistungsschwelle und die vorliegende Erfindung ist nicht darauf beschränkt, dass die Drehmomentschwelle nur einen physikalischen Wert für ein Drehmoment charakterisiert. Gleiches gilt für die Drehmomentanforderung, die in diesem Sinne ebenfalls funktional zu versehen ist und eine Last- und/oder Leistungsanforderung sein kann, die von der Drehmomentanforderung ebenfalls repräsentiert wird.

Die Drehmomentschwelle kann statisch sein oder auch dynamisch im Betrieb des Kraftfahrzeugs eingestellt werden, z. B. basierend auf dem Fahrzustand, dem aktuell von der elektrischen Maschine darstellbaren Drehmoment, einem Batterieladezustand, der Temperatur des elektrischen Antriebs (bestehend aus der E-Maschine und dem Inverter), der Batterietemperatur oder anderen Fahr(zeug)parametern.

Übersteigt eine Drehmomentanforderung, die bspw. von einem Kriechregler und/oder vom Fahrpedal stammt, die Drehmomentschwelle, so wird normalerweise die Verbrennungskraftmaschine zugeschaltet, das heißt, es wird in den Hybrid-Fahrzustand gewechselt.

Bei manchen Ausführungsbeispielen ist es sinnvoll, insbesondere das Anfahren des Kraftfahrzeugs aus dem Stand bis zu einer bestimmten Drehmomentschwelle (bzw. Last- oder Leistungsschwelle, die durch die Drehmomentschwelle charakterisiert sein kann) rein elektrisch durchzuführen. Dadurch können zum Beispiel einerseits der Betrieb der Verbrennungskraftmaschine in ungünstigen Wirkungsgradbereichen und andererseits häufige Motorstart- und -abstellvorgänge vermieden werden, was die Antriebseffizienz (Vermeidung von Startenergiebedarfen) sowie den Antriebskomfort ebenfalls steigern kann.

Bei manchen Ausführungsbeispielen ist ein Kriechregler vorgesehen, der in bekannter Weise, wie auch eingangs erwähnt, eine Kriechgeschwindigkeit, z. B. 5-8 km/h, einstellen kann. Dazu kann der Kriechregler ein bestimmtes Drehmoment anfordern, das von der elektrischen Maschine und ggf. von der Verbrennungskraftmaschine alleine oder in Kombination mit der wenigstens einen elektrischen Maschine bereitgestellt werden kann.

Es wurde aber erkannt, dass ein Starten bzw. Zuschalten der Verbrennungskraftmaschine bei Überschreiten der Drehmomentschwelle durch die Drehmomentanforderung nicht immer sinnvoll sein muss. Zum Beispiel in Situationen, in denen klar ist, dass das Überschreiten der Drehmomentanforderung nur vorübergehend ist, wurde erkannt, dass es sinnvoll sein kann, die Verbrennungskraftmaschine nicht zu starten.

Dabei kann es auch energetisch sinnvoll sein, den Start der Verbrennungskraftmaschine zu unterdrücken, wenn durch Überschreitung der Drehmomentschwelle (Last- und/oder Leistungsschwelle) aus Effizienzgründen ein Start der Verbrennungskraftmaschine angefordert wird, aber schon absehbar ist, dass dieser Grenzwert der M_{G} der Drehmomentschwelle (ggf. unter Berücksichtigung einer Hysterese) nur kurzzeitig überschritten wird. Dies kann insbesondere auch dann relevant sein, wenn sich durch eine leichte Steigung, Gegenwind, Rollwiderstandswerte der Fahrwiderstand des zu beschleunigenden Kraftfahrzeugs geringfügig ändern.

Entsprechend wird gemäß dem erfindungsgemäßen Verfahren, wenn die Drehmomentanforderung die erste Drehmomentschwelle übersteigt, das Kraftfahrzeug im elektrischen Fahrzustand betrieben, basierend auf einer Abweichung zwischen einem Soll-Fahrzustand und einem Ist-Fahrzustand. Das Wechseln in den Hybrid-Fahrzustand bzw. das Zuschalten (und damit verbundene Einschalten bzw. Starten) der Verbrennungskraftmaschine wird also unterdrückt, z. B. in Abhängigkeit davon, wie groß die Abweichung zwischen Soll-Fahrzustand und dem Ist-Fahrzustand des Kraftfahrzeugs ist.

Der Soll-Fahrzustand kann bspw. auf Grundlage eines Sollverlaufs für eine Geschwindigkeit des Kraftfahrzeugs, eines Sollverlaufs für eine Beschleunigung des Kraftfahrzeugs und/oder eines Sollverlaufs für das bereitgestellte Drehmoment der elektrischen Maschine ermittelt werden.

Der Soll-Fahrzustand kann den aktuellen oder auch einen zukünftigen Soll-Fahrzustand des Kraftfahrzeugs angeben. Der Soll-Fahrzustand kann bspw. angeben, welche Geschwindigkeit nach welcher Zeitdauer erreicht wird, basierend z. B. auf der Drehmomentanforderung.

Der Ist-Fahrzustand bezeichnet bei manchen Ausführungsbeispielen den aktuellen Fahrzustand, wobei dieser auf Grundlage vorgegebener Fahr(zeug)parameter charakterisiert sein kann, wie bspw. der Fahrzeuggeschwindigkeit, Fahrzeugbeschleunigung, Drehzahl der elektrischen Maschine usw.

Die Abweichung zwischen dem Soll-Fahrzustand und dem Ist-Fahrzustand ist dabei nicht auf eine reine Differenzbildung begrenzt und auch nicht auf einen bestimmten Zeitpunkt, sondern der Begriff Abweichung ist hier funktional zu verstehen.

Bei manchen Ausführungsbeispielen umfasst das Betreiben des Kraftfahrzeugs im elektrischen Fahrzustand das Anfahren des Kraftfahrzeugs, d. h. manche Ausführungsbeispiele betreffen das Anfahren bzw. das Ankriechen des Kraftfahrzeugs bspw. über einen Kriechregler, wie es auch oben ausgeführt wurde.

Bei manchen Ausführungsbeispielen wird auch auf Grundlage der Abweichung ermittelt, ob das Überschreiten der Drehmomentschwelle durch die Drehmomentanforderung nur (zeitlich) vorübergehend ist.

Die Abweichung kann dabei auch periodisch ermittelt werden und/oder nur einmal, z. B. wenn die Drehmomentanforderung bekannt ist.

Durch das Unterdrücken des Ein- bzw. Zuschaltens der Verbrennungskraftmaschine und das damit verbundene Unterdrücken des Hybrid-Fahrzustands, kann Kraftstoff gespart werden und die Verbrennungskraftmaschine kann geschont werden, da insbesondere Betriebszustände vermieden werden, bei denen die Verbrennungskraftmaschine nur für kurze Zeit eingeschaltet wird. Außerdem kann auch in Situationen die Verbrennungskraftmaschine ausgeschaltet bleiben, in denen außergewöhnliche Situationen vorliegen. Steht zum Beispiel das Kraftfahrzeug an einer Steigung, so kann es passieren, dass der Kriechregler (oder auch der Fahrer durch Betätigen des Fahrpedals), eine Drehmomentanforderung hat, die oberhalb der Schwelle liegt, da der Kriechregler in einer vorgegebenen Zeitdauer, eine vorgegebene Kriechgeschwindigkeit (z. B. zwischen 5-8 km/h) erreichen möchte. Hier würde ohne die Erfindung typischerweise die Verbrennungskraftmaschine gestartet werden, wobei dies, wie erwähnt, in vielen Fällen unnötig ist, z. B. weil die Steigung nur kurz vorhanden ist, der Fahrer nicht das Fahrpedal betätigt, da er bspw. im Stau steht und daher auch mit einer geringeren Kriechgeschwindigkeit zufrieden ist, etc.

Bei manchen Ausführungsbeispielen unterdrückt das Verfahren bei einem Anfahrvorgang über einen Kriechregler und ohne eine Fahrpedalanforderung (bzw. ohne eine zusätzliche Drehmoment-/Leistungsanforderung des Fahrers) den Verbrennungskraftmaschinenstart, wenn der oben beschriebene Drehmomentschwellwert überschritten wird. Das heißt, bei solchen Ausführungsbeispielen kann die Drehmomentanforderung ausschließlich vom Kriechregler stammen, da der Fahrer das Fahrpedal nicht betätigt und bspw. auch nicht bremst (Wie dem Fachmann bekannt, kann die Drehmomentanforderung auch negativ sein, wenn der Fahrer z. B. das Bremspedal betätigt.).

Das Verfahren kann weiter das Ermitteln der Abweichung zwischen dem Soll-Fahrzustand und dem Ist-Fahrzustand umfassen. Die Abweichung kann dabei bspw. so ermittelt werden, dass ein aktueller Ist-Fahrzustand mit einem aktuellen zugehörigen Soll-Fahrzustand verglichen wird. Die Abweichung kann aber auch auf Grundlage eines Gradienten eines Verlaufs des Ist-Fahrzustands und eines Gradienten des Verlaufs des Soll-Fahrzustands und eines Vergleich der beiden Gradienten ermittelt werden.

Wenn also zum Beispiel an einem Zeitpunkt die Abweichung zwischen einer Soll-Geschwindigkeit (Soll-Fahrzustand) des Kraftfahrzeugs und einer Ist-Geschwindigkeit (Ist-Geschwindigkeit) des Kraftfahrzeugs zu groß wird, z. B. einen Schwellwert überschreitet, kann daraus gefolgert werden, dass das Kraftfahrzeug länger benötigen wird, um die Soll-Geschwindigkeit zu erreichen, als vorgesehen ist. Mit anderen Worten folgt daraus, dass die Überschreitung der Drehmomentschwelle durch die Drehmomentanforderung nicht kurzzeitig sein wird, sondern längere Zeit dauern wird. Dies könnte aber den Fahrer stören und das Fahrerlebnis trüben.

Gleiches gilt natürlich auch für andere Fahr(zeug)parameter, die den Soll- bzw. Ist-Fahrzustand charakterisieren, wie die Beschleunigung, Drehmomentverlauf der elektrischen Maschine, Drehzahlverlauf der elektrischen Maschine usw.

Dementsprechend ist bei manchen Ausführungsbeispielen vorgesehen, dass das Kraftfahrzeug im elektrischen Fahrzustand betrieben wird, wenn die Abweichung zwischen dem Soll-Fahrzustand und dem Ist-Fahrzustand unterhalb eines Schwellwerts für die Abweichung liegt. Dadurch wird also der Wechsel in den Hybrid-Fahrzustand bzw. das Ein-/Zuschalten der Verbrennungskraftmaschine unterdrückt, wenn die Abweichung klein ist, was wiederum indikativ für ein vorübergehendes Überschreiten der Drehmomentschwelle durch die Drehmomentanforderung ist.

Bei manchen Ausführungsbeispielen wird die Abweichung auch zeitlich bestimmt, indem bspw. ermittelt wird, wie lange die Abweichung zwischen dem Soll-Fahrzustand und dem Ist-Fahrzustand bereits vorliegt. Wird eine vorgegebene Zeitdauer überschritten, in der die Abweichung zwischen Soll-Fahrzustand und Ist-Fahrzustand vorhanden ist, wird die Verbrennungskraftmaschine zu-/eingeschaltet bzw. das Kraftfahrzeug wechselt in den Hybrid-Fahrzustand. Dadurch kann eine übermäßige Wartezeit vermieden werden, bis das Kraftfahrzeug den Soll-Fahrzustand (z. B. Soll-Geschwindigkeit, Soll-Beschleunigung, Soll-Drehzahl, Soll-Drehmoment oder dergleichen) erreicht hat.

Bei manchen Ausführungsbeispielen wird der Soll-Fahrzustand auf Grundlage eines Sollverlaufs eines Fahrparameters, welcher den Bewegungsvorgang in einem Fahrzustand beschreibt, ermittelt, wobei der Sollverlauf in Abhängigkeit der Drehmomentanforderung berechnet wird. Der Fahrparameter kann bspw., wie auch schon oben für den Soll-Fahrzustand erläutert, eine Geschwindigkeit, eine Beschleunigung, ein Drehmoment der elektrischen Maschine(n), eine Drehzahl der elektrischen Maschine(n) oder ähnliches charakterisieren.

Bei manchen Ausführungsbeispielen sind unterschiedliche Sollverläufe für einen jeweiligen Fahrparameter vorgegeben, bspw. als Kennfeld, sodass für eine bestimmte Drehmomentanforderung ein zugehöriger Sollverlauf eines Fahrparameters bspw. mittels des Kennfelds ermittelt werden kann.

Wenn nun, wie es bei manchen Ausführungsbeispielen der Fall, das durch die Drehmomentanforderung geforderte Drehmoment nicht geliefert wird, weil die Verbrennungskraftmaschine gerade nicht dazu geschaltet wird, sondern das Kraftfahrzeug im elektrischen Fahrzustand bleibt, wie oben ausgeführt, kann ein Sollverlauf für einen Fahrparameter neu berechnet werden. Zum Beispiel kann dafür das Drehmoment, das durch die Drehmomentschwelle gegeben ist und welches z. B. dem maximalen Drehmoment der elektrischen Maschine(n) entspricht, als Grundlage für die (Neu-)Berechnung des Sollverlaufes des Fahrparameters verwendet werden. Es kann aber auch das aktuell von der elektrischen Maschine (oder den elektrischen Maschinen) maximal gelieferte Drehmoment als Grundlage für die Berechnung verwendet werden. Damit kann ein komfortabler und harmonischer Beschleunigungsverlauf für den Fahrer erreicht werden (keine harte Begrenzung des Antriebsmomentes beim Erreichen des Maximalwertes), falls die ursprünglich vorgegebenen Sollwerte durch die verfügbaren E-Maschinenmomente nicht erreicht werden.

Bei manchen Ausführungsbeispielen wird das Verfahren bzw. der Kriechregler derart erweitert, dass der Sollverlauf des Fahrparameters, z. B. Sollgeschwindigkeits- bzw. Solldrehzahlverlauf (bzw. die Gradienten beider Größen), auf Basis der aktuell verfügbaren Maximalwerte der Traktions-E-Maschine berechnet werden.

Außerdem können zusätzliche Fahrparameter berücksichtigt werden, wie z. B. solche, die den Fahrwiderstand des Kraftfahrzeugs beschreiben, wie z. B. die Fahrzeugmasse, der Rollwiderstand der Räder, Luftwiderstand (hier typischerweise nur ein geringer Einfluss) oder zusätzliche Antriebsstrangverluste. Ebenso kann eine Steigungserkennung z. B. über einen Neigungssensor erfolgen und ebenfalls in die (Neu-)Berechnung der o. a. Sollverlaufswerte zur Beschreibung bspw. des Kriechvorgangs einfließen.

Die Neuberechnung des Sollverlaufs kann dabei periodisch erfolgen und/oder ereignisbasiert, z. B. jedes Mal, wenn ein bestimmter Schwellwert überschritten wird, der bspw. für eine Drehzahl, ein Drehmoment oder dergleichen von der elektrischen Maschine gesetzt wird, für eine bestimmte Fahrzeuggeschwindigkeit, eine Beschleunigung des Fahrzeugs, etc.

Bei manchen Ausführungsbeispielen wird, falls unter den gegebenen Randbedingungen vorgegebene Grenzwerte für die Sollgeschwindigkeit (bzw. Solldrehzahl) bzw. Sollgeschwindigkeitsgradient (bzw. Solldrehzahlgradient) oder dergleichen unterschritten wird, d. h. wenn die Abweichung zwischen Soll-Fahrzustand und Ist-Fahrzustand zu groß wird (wie oben ausgeführt), ein Start der Verbrennungskraftmaschine eingeleitet, um das angeforderte bzw. erforderliche Antriebsmoment bereitzustellen. Wird der Grenzwert bereits vor/zu Beginn des Anfahrvorgangs unterschritten, d. h. ist bereits beim Start die Abweichung zwischen Soll-Fahrzustand und Ist-Fahrzustand zu groß (wie oben ausgeführt), kann ein sofortiger Start der Verbrennungskraftmaschine erfolgen, wobei dann wieder der ursprüngliche Sollverlauf für den Fahrparameter, wie für die Geschwindigkeit bzw. die Drehzahl, insbesondere im Kriechvorgang und im Kriechregler, vorgegeben werden kann.

Falls sich die E-Maschinenmomente, Fahrwiderstände oder die Fahrbahnneigung oder dergleichen, z. B. während des Ankriechens ändern, führen diese Änderungen der Werte bei manchen Ausführungsbeispielen zu einer Neuberechnung des Sollverlaufs des Fahrparameters, also z. B. des Geschwindigkeits- bzw. Drehzahlverlaufs. Auch hier kann bei einer Unterschreitung vorgegebener Grenzwerte, d. h. wenn die Abweichung zwischen Soll-Fahrzustand und Ist-Fahrzustand zu groß wird, ein Start der Verbrennungskraftmaschine eingeleitet werden.

Gemäß dem erfindungsgemäßen Verfahren wird das Kraftfahrzeug im Hybrid-Fahrzustand betrieben, wenn mit dem (neu berechneten) Sollverlauf eine Zielgeschwindigkeit des Kraftfahrzeuges erst nach einer vorgegebenen Zeitdauer erreicht wird. Mit anderen Worten, wird die Zielgeschwindigkeit nicht schnell genug erreicht, z. B. innerhalb einer vorgegebenen Zeitdauer, wird die Verbrennungskraftmaschine gestartet, um das erforderliche Antriebsmoment bereitzustellen (und damit wird auch in den Hybrid-Fahrzustand gewechselt). Dadurch wird bspw. eine zu lange Warteizeit für den Fahrer vermieden, bis die Zielgeschwindigkeit erreicht wird.

Bei manchen Ausführungsbeispielen erfolgt das (Starten und) Zuschalten der Verbrennungskraftmaschine, wenn das im elektrischen Fahrzustand von der/n elektrischen Maschine(n) bereitgestellte Drehmoment unterhalb der ersten Drehmomentschwelle liegt. Damit kann erreicht werden, dass in Fällen, in denen das von der elektrischen Maschine aktuell bereitgestellte Drehmoment deutlich zu niedrig ist, der Fahrer nicht verwundert ist, dass das Kraftfahrzeug keine Leistung bringt.

Bei manchen Ausführungsbeispielen wird das Kraftfahrzeug im Hybrid-Fahrzustand betrieben, wenn die Drehmomentanforderung eine zweite Drehmomentschwelle übersteigt, wobei die zweite Drehmomentschwelle größer ist als die erste Drehmomentschwelle. Dadurch kann eine Irritation das Fahrers vermieden werden, wenn die Drehmomentanforderung bspw. deutlich oberhalb der ersten Drehmomentschwelle liegt und daher erwartet wird, dass das Kraftfahrzeug entsprechend beschleunigt.

Bei manchen Ausführungsbeispielen wird das Kraftfahrzeug im Hybrid-Fahrzustand betrieben, wenn die Drehmomentanforderung länger als eine vorgegebene Zeitdauer zwischen der ersten und der zweiten Drehmomentschwelle liegt. Dies ist z. B. in Fällen hilfreich, in denen wider Erwarten die erhöhte Drehmomentanforderung doch nicht vorrübergehend ist, weil das Kraftfahrzeug bspw. einen Kriechvorgang an einem Berg beschreibt. Hier kann es für den Fahrer irritierend sein, wenn das Kraftfahrzeug längere Zeit sehr langsam kriecht.

Wie erwähnt, wird bei manchen Ausführungsbeispielen das Verfahren nicht eingesetzt, wenn sich durch die Drehmomentbegrenzung z. B. auf den von der Drehmomentschwelle vorgegebenen Wert, eine deutliche Änderung des Fahrverhaltens einstellt, also beispielsweise eine deutliche Überschreitung der Drehmomentschwelle um einen vorgegebenen Wert, eine deutliche Abnahme der Beschleunigung und/oder sich eine erhebliche Verlängerung des Ankriechvorgangs bis zur Erreichung einer Zieldrehzahl bzw. Zielgeschwindigkeit ergibt (beispielhaft jeweils > 20%, bevorzugt > 10% Erhöhung des Basiswertes (z. B. des Sollwerts)).

Manche Ausführungsbeispiele betreffen, wie oben ausgeführt, ein Kraftfahrzeug mit einer Verbrennungskraftmaschine und (mindestens) einer elektrischen Maschine wobei das Kraftfahrzeug in einem elektrischen Fahrzustand und in einem Hybrid-Fahrzustand betreibbar ist, wobei im elektrischen Fahrzustand die elektrische Maschine ein Antriebsmoment bereitstellt und im Hybrid-Fahrzustand die Verbrennungskraftmaschine Antriebsmoment bereitstellt, z. B. zusammen mit der (mindestens einen) elektrischen Maschine oder alleine, wobei das Kraftfahrzeug im Hybrid-Fahrzustand betrieben wird, wenn eine Drehmomentanforderung eine vorgegebene Drehmomentschwelle übersteigt, und mit einer Steuerung, die dazu eingerichtet ist, das hierin beschriebene Verfahren auszuführen.

Die Steuerung kann dabei typische Komponenten einer Motorsteuerung und/oder eines Hybridkoordinators aufweisen und hat bspw. einen oder mehrere Prozessoren, einen flüchtigen Speicher als Arbeitsspeicher, einen Festwertspeicher zum Ablegen von Daten, wie der Drehmomentschwelle, Sollverläufe, Kennfelder usw., Logikschaltungen, eine Schnittstelle zur Kommunikation mit einem Fahrzeug-Bus-System, wie CAN-Bus, Flex-Bus und dergleichen.

Ausführungsbeispiele der Erfindung werden nun beispielhaft und unter Bezugnahme auf die beigefügte Zeichnung beschrieben, in der:
Fig. 1 in schematischer Darstellung ein Ausführungsbeispiel eines Kraftfahrzeugs mit einem Hybridantriebssystem zeigt;
Fig.2 in schematischer Darstellung ein Ausführungsbeispiel einer Steuerung veranschaulicht;
Fig. 3 in schematischer Darstellung einen Kriechregler der Steuerung 2 darstellt;
Fig. 4 einen Drehmomentverlauf einer elektrischen Maschine und die Auswirkung eines Ausführungsbeispiels des erfindungsgemäßen Verfahrens darstellt;
Fig. 5 einen beispielhaften Drehzahlverlauf der elektrischen Maschine veranschaulicht;
Fig. 6 beispielhaft einen Beschleunigungsverlauf des Kraftfahrzeugs mit einer Verbrennungskraftmaschine und einer elektrischen Maschine zeigt; und
Fig. 7 ein Ablaufschema eines Ausführungsbeispiels eines Verfahrens zeigt.

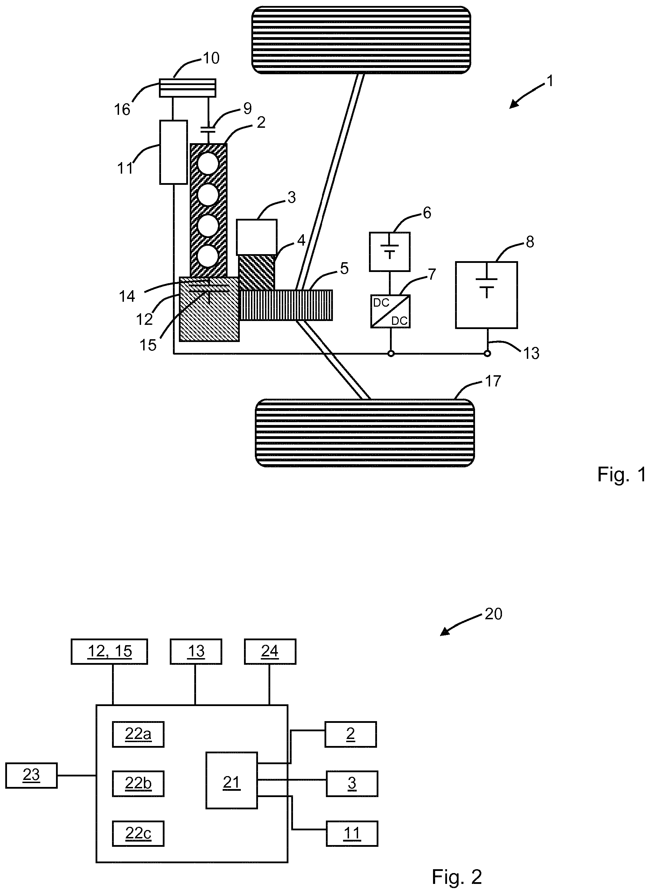

Fig. 1 veranschaulicht schematisch ein Ausführungsbeispiel eines Fahrzeuges mit einem Antriebsstrang 1 mit einer Verbrennungskraftmaschine 2 und zwei elektrischen Maschinen 3 und 11.

Das Fahrzeug ist ein Mild-Hybridfahrzeug bei dem eine elektrische Maschine, nämlich die elektrische Maschine 11, an die Verbrennungskraftmaschine 2 gekoppelt ist. Die Ankopplung erfolgt durch Integration in einen Riementrieb 10 und die elektrische Maschine 11 ist mit einem Zahnriemen oder einer Kette angetrieben (oder bei alternativen Ausführungsbeispielen als Starter-Generator an die Kurbelwelle angebunden). Außerdem ist eine weitere elektrische Maschine, nämlich die elektrische Maschine 3, direkt an den Fahrzeugantrieb angekoppelt. Die elektrische Maschine 3 hat ein Getriebe 4, welches mit einem Achsgetriebe 5 des Fahrzeugs gekoppelt ist.

Der Riementrieb 10 hat (optional) ein Koppelelement 9 und einen Riemenspanner 16, wobei der Riementrieb 10 über das Koppelelement 9 mit der Verbrennungskraftmaschine 2 gekoppelt ist, die hier beispielhaft als Vier-Zylinder-Ottomotor ausgestaltet ist.

Das Fahrzeug hat ein automatisches Doppelkupplungsgetriebe 12 mit einer Fahrkupplung 15, wobei eine Getriebeeingangswelle 14 in das Doppelkupplungsgetriebe 12 führt, wobei die Fahrkupplung 15 die Verbrennungskraftmaschine 2 die elektrische Maschine 11 an Antriebsräder 17 koppelt. Die elektrische Maschine 3 ist an das Achsgetriebe 4 gekoppelt. Dementsprechend wird ein Antriebsmoment, das von der Verbrennungskraftmaschine 2, der elektrischen Maschine 11 und/oder von der elektrischen Maschine 3 gestellt wird, auf die Antriebsräder 17 übertragen.

Außerdem sind ein 12-V Bordnetz 6 und ein Traktionsnetz 13 vorgesehen, die über einen Gleichspannungswandler 7 miteinander gekoppelt sind. Eine Hybrid-Batterie 8 (Traktionsbatterie) ist im Traktionsnetz 13 vorgesehen, wobei ein Batteriemanagementsystem (BMS) die elektrische Energie in bekannter Weise verwaltet.

Die elektrische Maschine 11 startet die Verbrennungskraftmaschine 2, z. B. beim Kaltstart, Start im Stillstand, Starten aus dem elektrischen Fahren heraus. Die zweite elektrische Maschine 3 ermöglicht das rein elektrische Fahren, wenn die Verbrennungskraftmaschine 2 abgeschaltet ist.

Beide elektrische Maschinen 3 und 11 können zum sogenannten Boosten genutzt werden, bei dem das Antriebsmoment von der Verbrennungskraftmaschine und zusätzlich von einer oder beiden elektrischen Maschinen 3 und 11 bereitgestellt wird.

Die zweite elektrische Maschine 3 oder auch noch weitere elektrische Maschinen können bei anderen Ausführungsbeispielen auch an der Hinterachse oder als direkte Radantriebe angeordnet sein.

Für die Rekuperation können ebenfalls beide elektrische Maschinen 3 bzw. 11 genutzt werden, wobei über die zweite elektrische Maschine 3 ohne Mitschleppen der Verbrennungskraftmaschine rekuperiert werden kann. Dabei sind das Anfahrelement bzw. die Getriebefahrkupplung(en) 15 geöffnet. Die erste elektrische Maschine 11 ist bspw. nur bei drehender Verbrennungskraftmaschine 2 in Betrieb.

Das Fahrzeug kann in drei Fahrzuständen betrieben werden, nämlich in einem rein elektrischen Fahrzustand, bei dem die zweite elektrische Maschine 3 das Antriebsmoment zum (An-)Fahren bereitstellt, ein Hybrid-Fahrzustand, bei dem die elektrische Maschine 3 zusammen mit der Verbrennungskraftmaschine 2 das Antriebsmoment bereitstellt und bspw. ein dritter Fahrzustand, bei dem nur die Verbrennungskraftmaschine 2 das Antriebsmoment bereitstellt. Wie oben ausgeführt, kann zusätzlich auch noch ein Boosten erfolgen.

Die Fig. 2 veranschaulicht schematisch eine Steuerung 20, die zur Steuerung des Fahrzeugs von Fig. 1 bzw. seines Antriebsstranges 1 ausgelegt ist und dazu eingerichtet ist, die hierin beschriebenen Verfahren wenigstens teilweise auszuführen.

Die Steuerung 20 ist hier funktional zu verstehen und sie kann eine Vielzahl von Komponenten umfassen, die sie für die Ausführung der Steuerungsaufgaben benötigt, wie einen oder mehrere Prozessoren, flüchtigen und nicht-flüchtigen Speicher, Schnittstellen, etc. Auch wenn die Steuerung 20 hier als ein Block dargestellt ist, kann die Steuerung 20 verteilt in dem Fahrzeug angeordnet sein und mehrere Steuerungskomponenten enthalten, die an verschiedenen Stellen angeordnet sind.

Die Steuerung 20 ist mit den einzelnen anzusteuernden Komponenten des Antriebstranges 1 verbunden, nämlich u. a. mit der Verbrennungskraftmaschine 2, der elektrischen Maschine 3, dem Getriebe 4, der elektrischen Maschine 11, dem Doppelkupplungsgetriebe 12, der Fahrkupplung 15 und dem Traktionsnetz 13 und weiteren Komponenten, die hier nicht aufgeführt sind.

Die Verbindung zwischen der Steuerung 20 und den einzelnen anzusteuernden Komponenten kann direkt oder indirekt erfolgen und läuft beispielweise über eine Kommunikationsschnittstelle, wie es allgemein bekannt ist. Für die Eingabe der Eingangsgrößen und die Ausgabe der Ausgangsgrößen kann die Steuerung entsprechende Eingangs- und Ausgangsschnittstellen aufweisen.

In der Steuerung 20 sind beispielhaft Kennfelder 22a, 22b und 22c gespeichert, wobei das Kennfeld 22a Sollverläufe für die Geschwindigkeit des Fahrzeugs enthält, das Kennfeld 22b Sollverläufe für die Beschleunigung des Fahrzeugs und das Kennfeld 22c Sollverläufe für das Drehmoment der elektrischen Maschine 3 enthält.

Die Steuerung 20 ist außerdem mit einem Fahrpedal 23 gekoppelt, über das eine Drehmomentanforderung des Fahrers erkannt werden kann.

Zusätzlich ist die Steuerung 20 mit einem Neigungssensor 24 gekoppelt, der einen Wert ausgibt, der indikativ für die Neigung des Fahrzeugs ist und damit für die Steigung einer Fahrbahn, auf der das Fahrzeug angeordnet ist.

Die Steuerung 20 ist außerdem dazu eingerichtet, verschiedene Ist-Fahrzustände des Fahrzeugs zu ermitteln, wie eine Ist-Geschwindigkeit, Ist-Beschleunigung, ein Ist-Drehmoment (Drehzahl) von der elektrischen Maschine 11, ein Ist-Drehmoment (Drehzahl) von der Verbrennungskraftmaschine 2, etc.

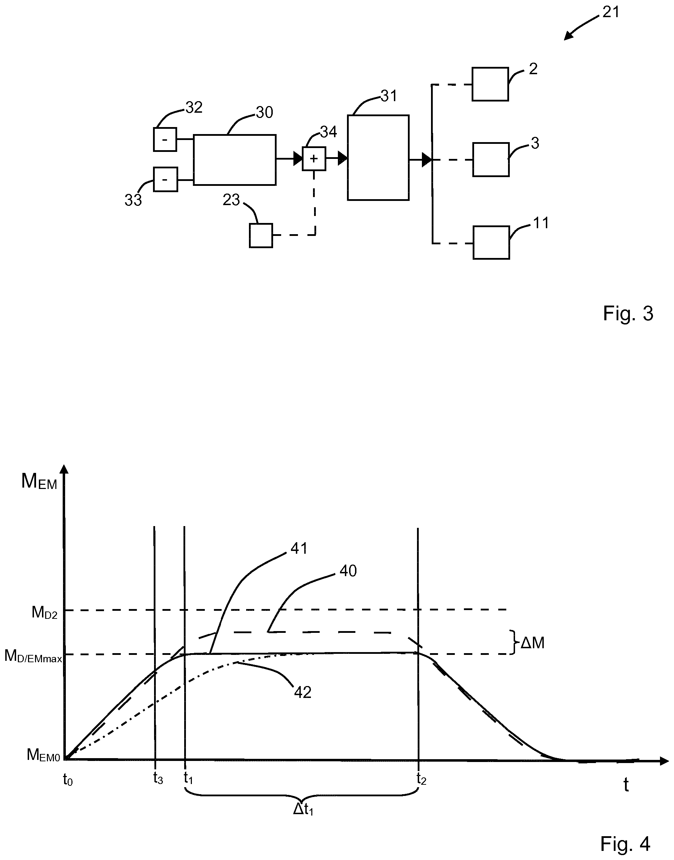

Der Kriechregler 21 ist detaillierter in der Fig. 3 veranschaulicht.

Wie auch schon in Fig. 2 angedeutet, ist der Kriechregler 21 mit den beiden elektrischen Maschinen 3 und 11 und mit der Verbrennungskraftmaschine 2 gekoppelt. Er hat in dieser beispielhaften Darstellung einen dem Fachmann grundsätzlich im Aufbau bekannten PI-Regler 30 und einen Drehmomentverteiler 31.

In den PI-Regler 30 gehen zum Beispiel symbolisiert im Block 32 die Differenz aus einer Soll-Geschwindigkeit und einer Ist-Geschwindigkeit des Fahrzeugs ein, wobei die Soll-Geschwindigkeit auf Grundlage des Kennfelds 22a ermittelt wird. Alternativ kann auch die Differenz aus einer Soll-Drehzahl (aus einem Kennfeld der Steuerung 20) der elektrischen Maschine 3 und die zugehörige Ist-Drehzahl genommen werden. Als weitere Alternative kann auch die Differenz der Gradienten genommen werden, wie bei Block 33 symbolisiert ist. Hier wird also die Differenz aus Soll-Geschwindigkeits-/Drehzahlgradient und Ist-Geschwindigkeits-/Drehzahlgradient gebildet (bei dieser Alternative sind die entsprechend Kennfelder für die Soll-Gradientenverläufe in der Steuerung 20 gespeichert).

Außerdem gehen in den PI-Regler 30 z. B. Daten aus dem Neigungssensor 24 ein (Fahrbahnneigung bzw. Fahrzeugneigung) oder auch andere, wie der aktuelle Fahrwiderstand, usw.

Ferner gehen in den PI-Regler 30 auch die Momentengrenzen der elektrischen Maschine 3 und 11 ein sowie die Momentengrenze der Verbrennungskraftmaschine 2.

Aus diesen Daten ermittelt der PI-Regler 30 ein Kriechmoment das benötigt wird, um das Fahrzeug auf die entsprechende Kriechgeschwindigkeit, die bspw. bei 7 km/h liegt, zu bringen.

Bei einem Block 34 geht dann das von dem PI-Regler ausgegebene Kriechmoment ein und wird addiert zu dem Moment, das von dem Fahrpedal 23 stammt und den Fahrerwunsch repräsentiert. Das ausgegebene Kriechmoment zusammen mit dem Moment vom Fahrpedal 23 wird auch als Drehmomentanforderung bezeichnet, wobei in der folgenden Beschreibung angenommen wird, dass neben dem Kriechmoment keine weiteren Momentenanforderungen, insbesondere vom Fahrer (Gasgeben, Bremsen), stammen und daher die Drehmomentanforderung im Wesentlichen dem Kriechmoment entspricht, das vom Pl-Regler 30 ausgegeben wird.

Die bei 34 addierten Momenten gehen als Drehmomentanforderung an den Drehmomentverteiler 31. Außerdem erhält der Drehmomentverteiler 31 die Information über die Momentengrenzen der elektrischen Maschinen 3 und 11 und der Verbrennungskraftmaschine 2. Der Drehmomentverteiler 31 entscheidet, welches Drehmoment von welcher Maschine 2, 3 bzw. 11 bereitgestellt wird, um die eingegangene Drehmomentanforderung zu erfüllen.

Wie oben bereits ausgeführt wird bei den Ausführungsbeispielen typischerweise im elektrischen Fahrzustand angefahren, sodass der Drehmomentverteiler 31 nur das Drehmoment von der elektrischen Maschine 3 anfordert. Wie ebenfalls oben erwähnt, ist typischerweise eine Drehmomentschwelle vorgesehen, ab der die Verbrennungskraftmaschine 2 zugeschaltet wird (der Drehmomentverteiler 31 fordert dann das zusätzlich Drehmoment von der Verbrennungskraftmaschine 2 an).

Dies ist auch in Fig. 4 veranschaulicht, die auf der Ordinate den Verlauf des Drehmoments M_{EM} der elektrischen Maschine 3 zeigt und auf der Abszisse die Zeit t.

Wie man auch der Fig. 4 entnehmen kann, gibt es eine Drehmomentschwelle M_{D}, die hier ohne, dass die Erfindung drauf beschränkt wäre, dem maximal von der elektrischen Maschine bereitgestellte Drehmoment M_{EMmax} entspricht. Bei anderen Ausführungsbeispielen kann die Drehmomentschwelle M_{D} auch ein strategischer Wert sein, bei dessen Erreichen die Verbrennungskraftmaschine 2 zugeschaltet (gestartet) wird und kann daher er auch unterhalb des maximalen Drehmoments M_{EMmax} der elektrischen Maschine 3 liegen.

Die Fig. 4 zeigt auch einen Drehmomentanforderungsverlauf 40, der einen zeitlichen Verlauf einer Drehmomentanforderung M_{A} darstellt, wie sie von dem Kriechregler 21 (bzw. seinen Drehmomentverteiler 31) kommen könnte.

Wie aus der Fig. 4 ersichtlich ist, übersteigt das angeforderte Drehmoment M_{A} zwischen den Zeitpunkten t₁ und t₂ die Drehmomentschwelle M_{D} bzw. das maximal Drehmoment M_{EMmax} der elektrischen Maschine 3, sodass ohne das erfindungsgemäße Verfahren, die Verbrennungskraftmaschine 2 zugeschaltet werden würde. Der Grund für so ein Überschreiten kann bspw. darin liegen, dass das Fahrzeug an einer Steigung steht.

Wie aber oben ausgeführt, schaltet die Steuerung 20 bzw. der Kriechregler 21 erfindungsgemäß gerade nicht die Verbrennungskraftmaschine 2 zu, wenn die Drehmomentschwelle M_{D} überschritten wird von der Drehmomentanforderung M_{A}, wenn ermittelt werden kann, dass die Überschreitung nur vorübergehend ist, was, wie oben ausgeführt, anhand einer Abweichung zwischen Soll-Fahrzustand und Ist-Fahrzustand ermittelt werden kann.

Dies führt zu einem erfindungsgemäßen Drehmomentverlauf 41 der elektrischen Maschine 3, bei dem die Drehmomentschwelle M_{D} nicht überschritten wird in dem Zeitintervall zwischen t₁ und t₂, wobei zu einem Zeitpunkt t₀ ein Drehmoment M_{EM0} vorliegt. Dementsprechend bleibt das Fahrzeug im elektrischen Fahrzustand und die Verbrennungskraftmaschine 2 muss nicht eingeschaltet werden.

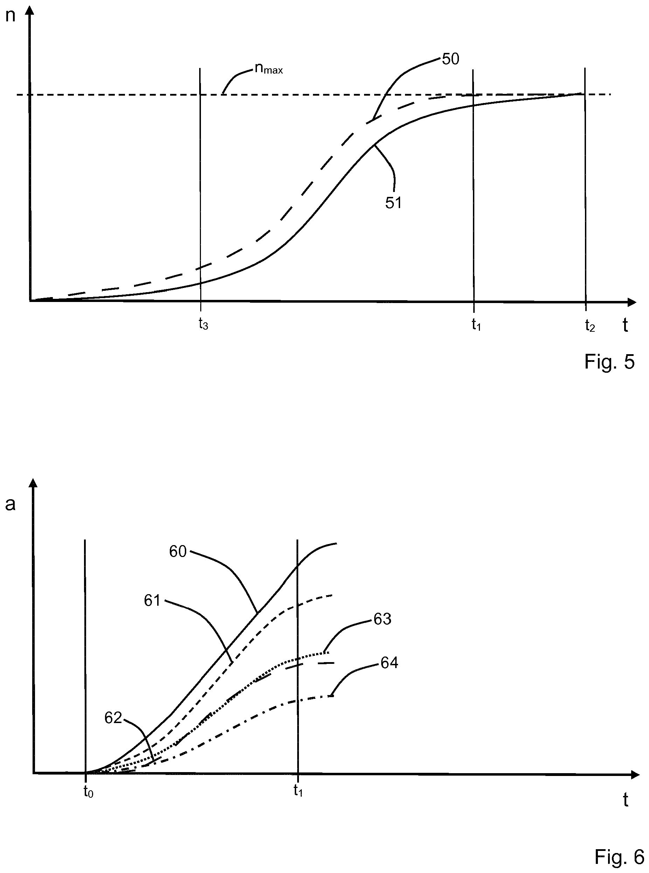

Fig. 5 veranschaulicht beispielhaft einen Drehzahlverlauf der elektrischen Maschine 3, wobei 50 einen Soll-Drehzahlverlauf zeigt und 51 einen Ist-Drehzahlverlauf der elektrischen Maschine 3, der sich ergibt, ohne dass die Verbrennungskraftmaschine 2 gestartet/zugeschaltet wird.

Die Zieldrehzahl nₘₐₓ der elektrischen Maschine 3 würde bei dem Soll-Drehzahlverlauf an einem ersten Zeitpunkt t₁ erreicht werden, wohingegen bei dem Ist-Drehzahlverlauf 51, die Zieldrehzahl nₘₐₓ erst zu einem späteren Zeitpunkt t₂ erreicht wird. Dabei entspricht die Zieldrehzahl nₘₐₓ auch einer Zielgeschwindigkeit, z. B. der zu erreichenden Kriechgeschwindigkeit.

Dass mit dem erfindungsgemäßen Verfahren die Zieldrehzahl nₘₐₓ oder Zielgeschwindigkeit erst später erreicht wird, ist unmittelbar einleuchtend, da eben nicht mehr als das maximale Drehmoment bzw. nicht mehr als das Drehmoment, das durch die Drehmomentschwelle M_{D} vorgegeben ist, bereitgestellt wird.

Angenommen, das Fahrzeug steht an einer Steigung, sodass der Kriechregler 21 eigentlich ein Drehmoment M_{A} anfordern würde, welches oberhalb der Drehmomentschwelle M_{D} liegt, so ist klar, dass das Fahrzeug langsamer die Steigung herauffährt, wenn nur ein geringeres Drehmoment bereitgestellt wird, weil das Fahrzeug im elektrischen Fahrzustand verbleibt und daher bspw. nur das maximale Drehmoment der elektrischen Maschine 3 zur Verfügung steht.

Zur Erkennung, dass das Überschreiten der Drehmomentanforderung M_{A} über die Drehmomentschwelle M_{D} nur vorübergehend ist, können nun verschiedene Analysen durchgeführt werden, die, wie oben ausgeführt, darauf beruhen, eine Abweichung zwischen einem Soll-Fahrzustand und einem Ist-Fahrzustand des Fahrzeugs auszuwerten.

Eine einfache Möglichkeit, eine vorübergehende Abweichung zwischen Soll- und Ist-Fahrzustand zu ermitteln, beruht zum Beispiel darauf, das Zeitintervall Δt₁ zwischen t₁ und t₂ in Fig. 4 zu ermitteln, in dem die Drehmomentanforderung M_{A} oberhalb der Drehmomentschwelle M_{D} liegt. Ist das Zeitintervall Δt₁ bspw. größer als eine vorgegebener Schwellwert, so kann man davon ausgehen, dass die Überschreitung der Drehmomentschwelle nicht vorrübergehend ist und das Verfahren startet die Verbrennungskraftmaschine 2 und schaltet diese dazu, um das fehlende Drehmoment AM, was der Differenz zwischen der Drehmomentschwelle M_{D} und dem angeforderten Drehmoment M_{A} entspricht, zu liefern.

Eine weitere Möglichkeit ist, bspw. eine Abweichung zwischen einem Soll-Verlauf und einem Ist-Verlauf eines entsprechenden Fahrparameters zu bestimmen, wie die Geschwindigkeit des Kraftfahrzeugs, die Beschleunigung des Kraftfahrzeugs oder der Sollverlauf für das bereitgestellte Drehmoment der elektrischen Maschine.

In Fig. 4 ist ein hypothetischer Ist-Verlauf 42 des Drehmoments der elektrischen Maschine 3 dargestellt, der deutlich flacher verläuft als der oben diskutierte Verlauf 41. Stellt nun die Steuerung 20, z. B. bei einem Zeitpunkt t₃ fest, dass die Abweichung zwischen dem Soll-Drehmomentverlauf 40 für die elektrische Maschine 3 und das tatsächlich am Zeitpunkt t₃ von der elektrischen Maschine 3 bereitgestellte Drehmoment einen Schwellwert überschreitet, so wird die Verbrennungskraftmaschine 3 gestartet.

Auf ähnliche Art und Weise kann die Abweichung zwischen Soll-Fahrzustand und Ist-Fahrzustand z. B. auch anhand der Drehzahl der elektrischen Maschine 3, wie in Fig. 5 gezeigt, ermittelt werden. Hier ist bspw. ebenfalls an einem Zeitpunkt t₃, die Abweichung zwischen der Soll-Drehzahl des Verlaufes 50 und des Ist-Drehzahlverlaufes 51 größer als ein vorgegebener Schwellwert, sodass auch hier die Verbrennungskraftmaschine 2 bspw. zugeschaltet werden kann.

Ferner kann auch ein weiterer Schwellwert, z. B. eine Drehmomentschwelle M_{D2} definiert werden. Ist die Drehmomentanforderung M_{A} größer als M_{D2} wird auf jeden Fall die Verbrennungskraftmaschine 2 gestartet und zugeschaltet.

Außerdem können, wie im Folgenden unter Bezugnahme auf die Fig. 6 erläutert wird, noch weitere Fahrparameter mit einbezogen werden, die bspw. den Fahrwiderstand des Kraftfahrzeugs beschreiben, wie beispielsweise die Fahrzeugmasse, der Rollwiderstand der Räder, Luftwiderstand sowie weitere zusätzliche Antriebsverluste und auch die Neigung, die bspw. mittels des Neigungssensors 24 ermittelt wird.

Damit kann zusätzlich die Steuerung 20 bzw. der Kriechregler 21 ein neuen Sollverlauf berechnen, zum Beispiel basierend auf dem tatsächlichen von der elektrischen Maschine 3 bereitgestellten Drehmoment.

Fig. 6 zeigt beispielhaft auf der Ordinate die Fahrzeug-Beschleunigung a und auf der Abszisse die Zeit t.

Ein Soll-Verlauf 60 einer Beschleunigung für das Fahrzeug, die bspw. aus dem Kennfeld 22b ermittelt wird, ist als durchgezogene Linie dargestellt und startet an einem Zeitpunkt t₀. Dieser Soll-Verlauf 60 kann natürlich u. U. nicht erreicht werden, wenn erfindungsgemäß die Verbrennungskraftmaschine 2 nicht gestartet wird, sodass sich ein geringerer Ist-Beschleunigungsverlauf 61 ergeben würde, der in Fig. 6 als gestrichelte Linie dargestellt ist.

Der tatsächliche Beschleunigungsverlauf 62 kann allerdings noch einmal geringer ausfallen, da bspw. das Fahrzeug an einer Steigung steht und die Fahrwiderstände z. B. höher sind als im Soll-Beschleunigungsverlauf 60 angenommen ist.

Um nun einerseits einen komfortablen Beschleunigungsverlauf zu erreichen, auch wenn die Verbrennungskraftmaschine 2 nicht gestartet wird und andererseits zu verhindern, dass bspw. die Verbrennungskraftmaschine 2 unnötig gestartet wird, weil bspw. aufgrund der vorliegenden Steigung die Zielgeschwindigkeit zu langsam erreicht wird, kann bei manchen Ausführungsbeispielen ein neuer Soll-Verlauf berechnet werden, der beispielhaft in Fig. 6 als gepunkteter Soll-Beschleunigungsverlauf 63 dargestellt ist.

Zur Berechnung des Soll-Beschleunigungsverlauf 63 kann die Steuerung 20 (bzw. der Kriechregler 21) das tatsächlich von der elektrischen Maschine 3 verfügbare Ist-Drehmoment als Grundlage nehmen und außerdem bspw. über den Neigungssensor 24 die Neigung ermitteln und miteinbeziehen und auch den Fahrwiderstand des Fahrzeugs miteinbeziehen. Der Fahrwiderstand des Fahrzeugs kann dabei modellbasiert ermittelt werden, wobei das Fahrzeug mit seinem Antriebsstrang 1 und den damit verbundenen Widerständen, wie Reibungswiderstände, Rollwiderstände, Luftwiderstand und mit seiner Fahrzeugmasse berücksichtigt wird.

Dabei kann der Soll-Beschleunigungsverlauf 63 auch neu berechnet werden, falls sich etwas an den Fahrparametern ändern sollte, z. B. wenn sich die Steigung, die mittels des Neigungssensors 24 ermittelt wird oder der Fahrwiderstand stark ändert.

Sollte der Ist-Beschleunigungsverlauf 64 (Strichpunktlinie) an einem Zeitpunkt, z. B. am Zeitpunkt t₁ in Fig. 6, stark vom neu berechneten Soll-Beschleunigungsverlauf 63 abweichen, das heißt, sollte bspw. die Differenz zwischen Ist-Beschleunigung und Soll-Beschleunigung am Zeitpunkt t₁ größer als ein Schwellwert sein, so wird die Verbrennungskraftmaschine 2 gestartet und zugeschaltet. Selbstverständlich kann auch ein anderer Soll-Verlauf verwendet werden, wie auch oben ausgeführt wurde.

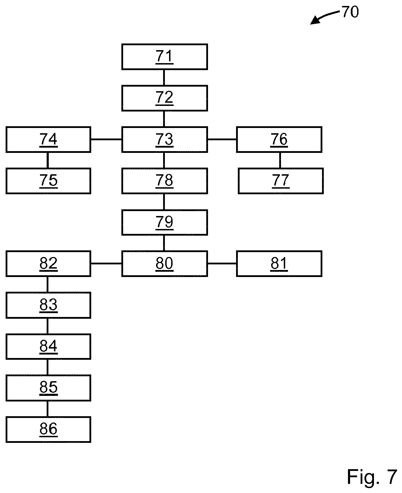

Fig. 7 veranschaulicht ein Verfahren 70, das bspw. von der Steuerung 20 ausgeführt werden kann.

Bei 71 überprüft das Verfahren zunächst, ob der Bremsdruck bzw. der Bremsweg kleiner als ein Schwellwert ist und bei diesem Ausführungsbeispiel ob der Fahrer, das Fahrpedal 23 nicht betätigt hat, d. h. es gibt keine Drehmomentanforderung vom Fahrpedal 23 (bei anderen Ausführungsbeispielen wird, wie oben erwähnt, auch eine Drehmomentanforderung vom Fahrpedal 24 mit berücksichtigt).

Bei 72 stellt die Steuerung 20 bzw. der Kriechregler 21 das Kriechmoment ein, das heißt in diesem Fall die Drehmomentanforderung M_{A} ein (ansonsten käme noch, wie oben ausgeführt, das vom Fahrpedal 23 angeforderte Drehmoment hinzu).

Bei 73 überprüft das Verfahren 70, wie groß die Drehmomentanforderung ist. Ist sie kleiner als die oben genannte Drehmomentschwelle M_{D}, d. h. M_{A} < M_{D}, dann geht das Verfahren in den linken Zweig, setzt bei 74 das Drehmoment auf das angeforderte Drehmoment M_{A} und setzt bei 75 das Fahrzeug in den elektrischen Fahrzustand, sodass rein elektrisch gefahren wird.

Ist bei 73 die Drehmomentanforderung M_{A} größer als die zweite Drehmomentschwelle M_{D2}, so geht das Verfahren 70 in rechten Zweig, setzt bei 76 das Drehmoment gleich dem angeforderten Drehmoment M_{A} und startet bei 77 die Verbrennungskraftmaschine 2, sodass sich das Fahrzeug im Hybridfahrzustand befindet.

Stellt das Verfahren bei 73 fest, dass die Drehmomentanforderung im Bereich zwischen der ersten Drehmomentschwelle M_{D} und der zweiten Drehmomentschwele M_{D2} liegt, also z. B. M_{D} < M_{A} < M_{D2}, so geht das Verfahren in den mittleren Zweig und setzt bei 78 das Drehmoment gleich dem Schwellwert M_{D} der Drehmomentschwelle M_{D}.

Bei 79 setzt das Verfahren das Fahrzeug in den elektrischen Fahrzustand und fordert von der elektrischen Maschine das gesetzte Drehmoment M_{D} an.

Bei 80 überprüft das Verfahren, ob, wie oben ausgeführt, die Abweichung zwischen dem Soll-Fahrzustand und dem Ist-Fahrzustand bspw. kleiner als ein vorgegebener Schwellwert ist.

Ist die Abweichung größer als der Schwellwert, so startet das Verfahren 70 bei 81 die Verbrennungskraftmaschine 2 und wechselt in den Hybrid-Fahrzustand.

Ergibt die Prüfung bei 80, dass die Abweichung kleiner als der Schwellwert ist, so bleibt das Verfahren bei 82 im elektrischen Fahrzustand.

Bei 83 berechnet das Verfahren 70 einen neuen Soll-Verlauf eines Fahrparameters, wie oben beschrieben, bspw. auch unter Berücksichtigung von Neigungssensordaten, Fahrwiderstand usw.

Stellt das Verfahren 70 bei 84 fest, dass sich die Fahrparameter wesentlich geändert haben, so springt es zurück nach 83 und berechnet einen neuen Soll-Verlauf.

Stell das Verfahren 70 bei 85 fest, dass die Abweichung zwischen dem Soll-Fahrzustand basierend auf dem bei 83 neu berechneten Soll-Verlauf und der Ist-Fahrzustand größer als ein vorgegebener Schwellwert ist, so startet das Verfahren 70 bei 86 die Verbrennungskraftmaschine 2 und wechselt in den Hybrid-Fahrzustand.

Die oben genannten Verfahrensschritte können auch periodisch wiederholt werden.

### Bezugszeichenliste

1 Antriebsstrang
2 Verbrennungskraftmaschine
3 elektrische Maschine 1
4 Getriebe für elektrische Maschine 1
5 Achsgetriebe
6 12 V-Bordnetz bzw. Starterbatterie
7 Gleichspannungswandler
8 Hybrid-Batterie (Traktionsbatterie)
9 Koppelelement
10 Riementrieb
11 elektrische Maschine 2
12 Doppelkupplungsgetriebe
13 Traktionsnetz
14 Getriebeeingangswelle
15 Fahrkupplung (hier nur eine Fahrkupplung des Doppelkupplungsgetriebes dargestellt)
16 Riemenspanner
17 Antriebsrad
20 Steuerung
21 Kriechregler
22a Kennfeld Soll-Geschwindigkeit
22b Kennfeld Soll-Beschleunigung
22c Kennfeld Soll-Drehmoment
23 Fahrpedal
24 Neigungssensor
30 PI-Regler
31 Drehmomentverteiler
32 Differenz zwischen Soll-Geschwindigkeit und Ist-Geschwindigkeit
33 Differenz zwischen Soll-Geschwindigkeitsgradient und Ist-Geschwindigkeitsgradient
34 Addition Kriechmoment und Fahrerwunschmoment
40 Drehmomentanforderungsverlauf des angeforderten Drehmoment M_{A}
41 Drehmomentverlauf der elektrischen Maschine 3
42 Hypothetischer Ist-Verlauf des Drehmoments
50 Solldrehzahlverlauf
51 Ist-Drehzahlverlauf
60 Soll-Beschleunigungsverlauf
61 Ist-Beschleunigungsverlauf
62 tatsächlicher Beschleunigungsverlauf
63 neu berechneter Soll-Beschleunigungsverlauf
64 Ist-Beschleunigungsverlauf
70 Verfahren
71 Überprüfe Bremsdruck, Bremsweg, Fahrpedal
72 Kriechmoment einstellen
73 Überprüfe Größe Drehmomentanforderung
74 Setzt Drehmoment auf angefordertes Drehmoment
75 Setze Fahrzeug in den elektrischen Fahrzustand
76 Setze Drehmoment auf Drehmomentanforderung
77 Starte Verbrennungskraftmaschine
78 Setze Drehmoment auf Drehmomentschwellwert
79 Setze Fahrzeug in den elektrischen Fahrzustand
80 Überprüfe Abweichung zwischen Soll-Fahrzustand und Ist-Fahrzustand
81 Starte Verbrennungskraftmaschine
82 Setze in elektrischen Fahrzustand
83 Berechne neuen Soll-Verlauf
84 Überprüfe Änderung Fahrparameter
85 Überprüfe Abweichung zwischen Ist-Fahrzustand und Soll-Fahrzustand
86 Starte Verbrennungskraftmaschine
M_{EM} Drehmoment elektrische Maschine
M_{D} Drehmomentschwelle
M_{EMmax} maximales Drehmoment der elektrische Maschine 3
M_{EM0} Drehmoment zum Zeitpunkt t₀
nₘₐₓ Zieldrehzahl elektrische Maschine 3
ΔM Differenz zwischen angefordertem Drehmoment und Drehmomentschwelle
t₀ nullter Zeitpunkt
t₁ erster Zeitpunkt
t₂ zweiter Zeitpunkt
t₃ dritter Zeitpunkt

## Patentansprüche

1. Verfahren zur Steuerung eines Kraftfahrzeuges mit einer Verbrennungskraftmaschine (2) und einer elektrischen Maschine (3), wobei das Kraftfahrzeug in einem elektrischen Fahrzustand und in einem Hybrid-Fahrzustand betreibbar ist, wobei im elektrischen Fahrzustand die elektrische Maschine (3) ein Antriebsmoment bereitstellt und im Hybrid-Fahrzustand die Verbrennungskraftmaschine (2) Antriebsmoment bereitstellt, wobei das Kraftfahrzeug in einem Hybrid-Fahrzustand betrieben wird, wenn eine Drehmomentanforderung eine erste Drehmomentschwelle (M_{D}) übersteigt, wobei das Verfahren umfasst:
Betreiben (79) des Kraftfahrzeuges im elektrischen Fahrzustand, wenn die Drehmomentanforderung die erste Drehmomentschwelle (M_{D}) übersteigt, basierend auf einer Abweichung zwischen einem Soll-Fahrzustand (41, 50, 60, 63) und einem Ist-Fahrzustand (42, 51, 62, 64) des Kraftfahrzeugs,
wobei der Soll-Fahrzustand (41, 50, 60, 63) auf Grundlage eines Sollverlaufs eines Fahrparameters, welcher den Bewegungsvorgang in einem Fahrzustand beschreibt, ermittelt wird, wobei der Sollverlauf in Abhängigkeit der Drehmomentanforderung berechnet wird,
wobei das Kraftfahrzeug im Hybrid-Fahrzustand betrieben wird, wenn mit dem Sollverlauf (41, 50, 60, 63) eine Zielgeschwindigkeit des Kraftfahrzeuges erst nach einer vorgegebenen Zeitdauer erreicht wird.

2. Verfahren nach Anspruch 1, wobei das Betreiben des Kraftfahrzeugs im elektrischen Fahrzustand das Anfahren des Kraftfahrzeugs umfasst.

3. Verfahren nach Anspruch 1 oder 2, wobei das Kraftfahrzeug im elektrischen Fahrzustand betrieben wird, wenn die Abweichung zwischen dem Soll-Fahrzustand (41, 50, 60, 63) und dem Ist-Fahrzustand (42, 51, 62, 64) unterhalb eines Schwellwerts für die Abweichung liegt.

4. Verfahren nach einem der vorhergehenden Ansprüche, wobei der Soll-Fahrzustand (41, 50, 60, 63) auf Grundlage eines Sollverlaufs für eine Geschwindigkeit des Kraftfahrzeugs, eines Sollverlaufs für eine Beschleunigung des Kraftfahrzeugs und/oder eines Sollverlaufs für das bereitgestellte Drehmoment der elektrischen Maschine ermittelt wird.

5. Verfahren nach einem der vorhergehenden Ansprüche, wobei das Zuschalten der Verbrennungskraftmaschine (2) erfolgt, wenn das im elektrischen Fahrzustand von der elektrischen Maschine darstellbare Drehmoment unterhalb der ersten Drehmomentschwelle (M_{D}) liegt.

6. Verfahren nach einem der vorhergehenden Ansprüche, wobei das Kraftfahrzeug im Hybrid-Fahrzustand betrieben wird, wenn die Drehmomentanforderung eine zweite Drehmomentschwelle (M_{D2}) übersteigt, wobei die zweite Drehmomentschwelle (M_{D2}) größer ist als die erste Drehmomentschwelle (M_{D}).

7. Verfahren nach Anspruch 6, wobei das Kraftfahrzeug im Hybrid-Fahrzustand betrieben wird, wenn die Drehmomentanforderung länger als eine vorgegebene Zeitdauer zwischen der ersten (M_{D}) und der zweiten Drehmomentschwelle (M_{D2}) liegt.

8. Kraftfahrzeug mit einer Verbrennungskraftmaschine (2) und einer elektrischen Maschine (3) wobei das Kraftfahrzeug in einem elektrischen Fahrzustand und in einem Hybrid-Fahrzustand betreibbar ist, wobei im elektrischen Fahrzustand die elektrische Maschine (3) ein Antriebsmoment bereitstellt und im Hybrid-Fahrzustand die Verbrennungskraftmaschine (2) Antriebsmoment bereitstellt, wobei das Kraftfahrzeug im Hybrid-Fahrzustand betrieben wird, wenn eine Drehmomentanforderung eine vorgegebene Drehmomentschwelle (M_{D}) übersteigt, und mit einer Steuerung (20), die dazu eingerichtet ist, das Verfahren nach einem der Ansprüche 1 bis 7 auszuführen.

## Claims

1. Method for controlling a motor vehicle having an internal combustion engine (2) and an electric machine (3), wherein the motor vehicle is operable in an electric driving state and in a hybrid driving state, wherein, in the electric driving state, the electric machine (3) provides a drive torque, and in the hybrid driving state, the internal combustion engine (2) provides a drive torque, wherein the motor vehicle is operated in a hybrid driving state if a torque demand exceeds a first torque threshold (M_{D}), wherein the method comprises:
operating (79) the motor vehicle in the electric driving state, if the torque demand exceeds the first threshold value (M_{D}), on the basis of a deviation between a setpoint driving state (41, 50, 60, 63) and an actual driving state (42, 51, 62, 64) of the motor vehicle,
wherein the setpoint driving state (41, 50, 60, 63) is determined on the basis of a setpoint course of a driving parameter that describes the movement sequence in a driving state, wherein the setpoint course is calculated in a manner dependent on the torque demand,
wherein the motor vehicle is operated in the hybrid driving state if, with the setpoint course (41, 50, 60, 63), a target speed of the motor vehicle is reached only after a specified period of time.

2. Method according to Claim 1, wherein the operation of the motor vehicle in the electric driving state includes the launching of the motor vehicle.

3. Method according to Claim 1 or 2, wherein the motor vehicle is operated in the electric driving state if the deviation between the setpoint driving state (41, 50, 60, 63) and the actual driving state (42, 51, 62, 64) lies below a threshold value for the deviation.

4. Method according to any one of the preceding claims, wherein the setpoint driving state (41, 50, 60, 63) is determined on the basis of a setpoint course for a speed of the motor vehicle, a setpoint course for an acceleration of the motor vehicle and/or a setpoint course for the torque provided by the electric machine.

5. Method according to any one of the preceding claims, wherein the internal combustion engine (2) is activated if the torque that can be imparted by the electric machine in the electric driving state lies below the first torque threshold (M_{D}).

6. Method according to any one of the preceding claims, wherein the motor vehicle is operated in the hybrid driving state if the torque demand exceeds a second torque threshold (M_{D2}), wherein the second torque threshold (M_{D2}) is higher than the first torque threshold (M_{D}) .

7. Method according to Claim 6, wherein the motor vehicle is operated in the hybrid driving state if the torque demand lies between the first (M_{D}) and the second torque threshold (M_{D2}) for longer than a specified period of time.

8. Motor vehicle having an internal combustion engine (2) and an electric machine (3), wherein the motor vehicle is operable in an electric driving state and in a hybrid driving state, wherein, in the electric driving state, the electric machine (3) provides a drive torque, and in the hybrid driving state, the internal combustion engine (2) provides a drive torque, wherein the motor vehicle is operated in the hybrid driving state if a torque demand exceeds a first torque threshold (M_{D}), and having a controller (20) which is configured to carry out the method according to any one of Claims 1 to 7.

## Revendications

1. Procédé de commande d'un véhicule automobile comprenant un moteur à combustion interne (2) et une machine électrique (3), le véhicule automobile pouvant fonctionner dans un mode de conduite électrique et dans un mode de conduite hybride, la machine électrique (3) fournissant un couple d'entraînement dans le mode de conduite électrique, et le moteur à combustion interne (2) fournissant un couple d'entraînement dans le mode de conduite hybride, le véhicule automobile fonctionnant dans le mode de conduite hybride si une demande de couple dépasse un premier seuil de couple (M_{D}), le procédé comprenant les étapes consistant à :
faire fonctionner (79) le véhicule automobile dans le mode de conduite électrique si la demande de couple dépasse le premier seuil de couple (M_{D}) sur la base d'un écart entre un mode de conduite théorique (41, 50, 60, 63) et un mode de conduite réel (42, 51, 62, 64) du véhicule automobile,
le mode de conduite théorique (41, 50, 60, 63) étant déterminé sur la base d'une évolution théorique d'un paramètre de conduite qui décrit l'opération de déplacement dans un mode de conduite, l'évolution théorique étant calculée en fonction de la demande de couple,
le véhicule automobile fonctionnant dans le mode de conduite hybride si l'évolution théorique (41, 50, 60, 63) ne permet d'atteindre une vitesse cible du véhicule automobile qu'après une durée prédéfinie.

2. Procédé selon la revendication 1, dans lequel le fonctionnement du véhicule automobile dans le mode de conduite électrique comprend le démarrage du véhicule automobile.

3. Procédé selon la revendication 1 ou 2, dans lequel le véhicule automobile fonctionne dans le mode de conduite électrique si l'écart entre le mode de conduite théorique (41, 50, 60, 63) et le mode de conduite réel (42, 51, 62, 64) est inférieur à une valeur seuil de l'écart.

4. Procédé selon l'une quelconque des revendications précédentes, dans lequel le mode de conduite théorique (41, 50, 60, 63) est déterminé sur la base d'une évolution théorique pour une vitesse du véhicule automobile, d'une évolution théorique pour une accélération du véhicule automobile et/ou d'une évolution théorique pour le couple fourni de la machine électrique.

5. Procédé selon l'une quelconque des revendications précédentes, dans lequel la mise en circuit du moteur à combustion interne (2) est effectuée si le couple pouvant être produit par la machine électrique dans le mode de conduite électrique est inférieur au premier seuil de couple (M_{D}).

6. Procédé selon l'une quelconque des revendications précédentes, dans lequel le véhicule automobile fonctionne dans le mode de conduite hybride si la demande de couple dépasse un deuxième seuil de couple (M_{D2}) , le deuxième seuil de couple (M_{D2}) étant supérieur au premier seuil de couple (M_{D}).

7. Procédé selon la revendication 6, dans lequel le véhicule automobile fonctionne dans le mode de conduite hybride si la demande de couple est plus longue qu'une durée prédéfinie entre le premier seuil de couple (M_{D}) et le deuxième seuil de couple (M_{D2}) .

8. Véhicule automobile comprenant un moteur à combustion interne (2) et une machine électrique (3), le véhicule automobile pouvant fonctionner dans un mode de conduite électrique et dans un mode de conduite hybride, la machine électrique (3) fournissant un couple d'entraînement dans le mode de conduite électrique, et le moteur à combustion interne (2) fournissant un couple d'entraînement dans le mode de conduite hybride, le véhicule automobile fonctionnant dans le mode de conduite hybride si une demande de couple dépasse un premier seuil de couple (M_{D}), et comprenant un dispositif de commande (20) qui est conçu pour exécuter le procédé selon l'une quelconque des revendications 1 à 7.
